# EUROPÄISCHE PATENTSCHRIFT

(11) **EP 1 657 678 B1**
(45) Veröffentlichungstag und Bekanntmachung des Hinweises auf die Patenterteilung: **12.09.2007**
(21) Anmeldenummer: 04027075.3
(22) Anmeldetag: 15.11.2004
(51) Int. Cl.: G06T 7/00

(54) **Videobildunterstützte Patientenregistrierung**
Patient registration assisted by video imaging
Recalage d'un patient assisté par imagerie vidéo

(43) Veröffentlichungstag der Anmeldung: 17.05.2006
(73) Patentinhaber: BrainLAB AG, 85551 Kirchheim/Heimstetten (DE)
(72) Erfinder: Vilsmeier, Stefan, 6330 Kufstein (AT); Manus, Johannes, Dr., 81479 München (DE)
(74) Vertreter: Schwabe - Sandmair - Marx

(56) Entgegenhaltungen:
- WO-A-01/59708
- US-A1- 2002 188 194
- COLCHESTER A.C.F. ET AL: "Development and preliminary evaluation of VISLAN, a surgical planning and guidance system using intra-operative video imaging" MEDICAL IMAGE ANALYSIS, Bd. 1, Nr. 1, 1996, Seiten 73-90, XP002322964
- BANKMAN I.N.: "Handbook of Medical Imaging - Processing and Analysis" 2000, ACADEMIC PRESS , SAN DIEGO , XP002322965 * Seite 623 - Seite 633 *

## Beschreibung

Die vorliegende Erfindung betrifft ein Verfahren und eine Vorrichtung zur videobildunterstützten Patientenregistrierung, insbesondere ein Verfahren zur gegenseitigen Zuordnung der Raumposition eines Patienten und eines gespeicherten Patientendatensatzes, wobei mindestens zwei Videobildaufnahmen des Patienten erstellt werden, und bestimmte Punkte oder eine beliebige Menge von Punkten der beiden Videobildaufnahmen als korrespondierende Punktpaare ermittelt werden, um daraus dreidimensionale Positionen zu ermitteln und diese mit den gespeicherten Patientendaten in möglichst große Übereinstimmung zu bringen, um die Registrierung des Patienten zu ermöglichen.

Die Druckschrift "Development and preliminary evaluation of VISLAN, a surgical planning and guidance system using intra-operative video imaging" von Colchester A.C.F. et al. betrifft ein so genanntes VISLAN-System, welches ein integriertes chirurgisches Planungs- und Führungssystem ist. Ein Stereo-Videosystem wird intra-operativ genutzt, um eine Hautoberfläche aus den gemachten Stereo-Videobildern zu rekonstruieren, um einen Lokalisierer zu verfolgen und um an dem Patienten befestigte Marker zu detektieren, so dass intra-operative Bewegung des Patienten detektiert werden kann und eine erneute Registrierung ausgeführt werden kann.

Die US 2002/0188194 betrifft ein chirurgisches Positionierungssystem zur Positionierung und Wiederpositionierung eines Teils eines Patientenkörpers in Bezug auf eine Behandlungs- oder Bildgebungsmaschine mit einer Vielzahl von Kameras, um den Körper und die Maschine zu betrachten. Marker oder natürliche Landmarken werden von den Kameras identifiziert und im Raum lokalisiert.

Die WO 01/59708 A1 offenbart ein Verfahren zur direkten Registrierung zweier oder mehrere zweidimensionaler optischer Bilder bezüglich dreidimensionaler Bilder oder Computermodelle ohne vorherige Segmentierung, wobei eine Vielzahl an optischen Bildern eines Objekts und ein dreidimensionales Oberflächenmodell des Objekts ermittelt werden, wobei ein Satz von Anfangsparametern gewählt wird, welcher eine Schätzung der Registrierung zwischen dem Koordinatensystem des dreidimensionalen Modells und dem Koordinatensystem des optischen Bildes festlegt, die Qualität der Registrierung mittels einer Ähnlichkeitsmessung gemessen wird und dies wiederholt wird, bis ein Maximum der Ähnlichkeitsmessung gefunden wird. Mittels der Ähnlichkeitsmessung wird ein Maß berechnet, welches angibt wie gleichmäßig die Intensitätsinformation in jedem Bild ist.

Es ist eine Aufgabe der vorliegenden Erfindung ein Verfahren und eine Vorrichtung zur videobildunterstützten Patientenregistrierung vorzuschlagen, mit welchen eine schnelle, unaufwändige, flexible und genaue Registrierung eines Patienten bzw. eines Körperteils eines Patienten ermöglicht wird.

Diese Aufgabe wird durch die Gegenstände der unabhängigen Ansprüche gelöst. Vorteilhafte Ausführungsformen ergeben sich aus den Unteransprüchen.

Mit anderen Worten werden oftmals ungenaue Registrierungsgeräte, wie Pointer, die häufig auch einen hohen Rechenaufwand und/oder spezielle Geräte erfordern, durch Videobildquellen, wie Kameras, ersetzt, um einen Registrierungsvorgang eines Patienten bzw. eines Körperteils eines Patienten durchzuführen.

Bei dem erfindungsgemäßen Verfahren zur gegenseitigen Zuordnung der Raumposition eines Patienten bzw. eines Körperteils eines Patienten und eines akquirierten, gespeicherten Patientendatensatzes kann zunächst mindestens eine Videobildquelle, wie eine Kamera, die z.B. eine Trackingreferenz aufweisen kann, wie z.B. Marker oder einen Referenzstern, in den Erfassungsbereich eines Trackingsystems gebracht werden, welches die dreidimensionale Raumposition und/oder Orientierung der Videobildquelle erfassen kann, falls eine Trackingreferenz auf der Videobildquelle angeordnet ist. Solange sich die Videobildquelle in dem Erfassungsbereich des Trackingsystems befindet, ist, wenn auf der Videobildquelle eine Trackingreferenz angeordnet ist, dem Trackingsystem zu jeder Zeit bekannt, an welcher Position oder Stelle im Raum sich die Videobildquelle befindet, insbesondere an welcher dreidimensionalen Raumposition die Videobildquelle eine Aufnahme ausgeführt oder vorgenommen hat. Mit der Videobildquelle werden, vorzugsweise während sich die Videobildquelle im Erfassungsbereich des Trackingsystems befindet, mindestens zwei Videobildaufnahmen oder Bilder eines Patienten bzw. eines Körperteils eines Patienten aus unterschiedlichen Aufnahmepositionen erstellt, wobei dem Trackingsystem bekannt ist, an welcher Stelle oder Position des Raumes die Videobildquelle die Aufnahme durchgeführt hat oder die Aufnahme erfolgt ist.

Die Lage oder Position des Patienten bzw. des Körperteils des Patienten kann vorzugsweise bezüglich eines Referenzkoordinatensystems bekannt sein und/oder kann unveränderlich bzgl. des Trackingsystems sein oder kann z.B. mittels eines Kalibriervorgangs oder eines Registrierungsvorganges bestimmt werden und/oder mittels einer Trackingreferenz, die am Patienten bzw. am Körperteil des Patienten befestigt sein kann, ermittelt und/oder verfolgt werden, wobei vorzugsweise die Position des Patienten bzw. des Körperteils des Patienten relativ zu der Videobildquelle ermittelt wird. Ist z.B. an dem Patienten bzw. an dem Körperteil des Patienten, welches von der Videobildquelle aufgenommen werden soll, eine Trackingreferenz, wie Marker oder ein Referenzstern, angeordnet, so kann das Trackingsystem die Lage oder Position und/oder die Veränderung der Lage oder Position des Körpers bzw. Körperteils des Patienten im Raum, vorzugsweise bezüglich eines Referenzkoordinatensystems, ermitteln, so dass Bewegungen und Verschiebungen des Patienten bzw. Körperteils des Patienten von dem Trackingsystem erkannt werden können und die neue Position des Patienten bzw. Patientenkörperteils bestimmt werden kann. Unter Berücksichtigung der dreidimensionalen Raumposition des Körpers bzw. Körperteils und der dreidimensionalen Raumposition der Videobildquelle während des Aufnahmevorgangs kann bestimmt werden, in welcher Lage oder Position der mindestens einen Videobildquelle relativ zu dem Patienten bzw. Körperteil des Patienten die Aufnahme des Patienten bzw. des Körperteils des Patienten erfolgt ist. Somit kann die Lage oder Position des Patienten bzw. Patientenkörperteils und/oder die Lage oder Position der Videobildquelle bekannt sein oder es kann mittels des Trackingsystems die absolute Lage oder Position des Körpers bzw. Körperteils des Patienten sowie die absolute Position der Videobildquelle im Raum und die relative Lage oder Position der mindestens einen Videobildquelle zu dem Körper bzw. Körperteil des Patienten ermittelt werden.

Insbesondere können in den gemachten Videobildaufnahmen oder Bildern korrespondierende Punkte oder Punkttupel und/oder charakteristische Punkte, insbesondere Landmarkenpunkte, identifiziert werden, und den Punkten oder Landmarkenpunkten können, da vorzugsweise die Position des aufgenommenen Körpers oder Körperteils im Raum bekannt ist oder durch das Trackingsystem ermittelt wurde und/oder die Lage der Videobildquelle im Raum beim Aufnehmen der Bilder bekannt sein kann oder durch das Trackingsystem ermittelt werden kann, dreidimensionale Raumpositionen zugeordnet werden, welche z.B. ausgegeben und/oder gespeichert werden können. Werden z.B. korrespondierende Punkttupel oder eine Vielzahl korrespondierender Punkte dreidimensionalen Raumpositionen zugeordnet, so entsteht eine Punktwolke oder Punktmenge an Raumpositionen. Der akquirierte, gespeicherte Patientendatensatz wird anschließend computergestützt mit der Punktmenge der zugeordneten Raumposition soweit als möglich in Übereinstimmung oder Korrespondenz gebracht, indem z.B. die Punkte der Punktwolke oder Punktmenge der zugeordneten Raumpositionen über die zugehörigen oder korrespondierenden Punkte im Patientendatensatz gelegt werden, so dass diese virtuell zumindest nahezu an derselben Stelle oder zumindest nahezu übereinander liegen. Dabei können die Abstände jedes Punktes aus der Punktmenge zu den korrespondierenden Punkten des Patientendatensatzes ermittelt werden, und es kann z.B. der virtuelle Vergleich oder die Ermittlung des Abstandes der Punkte aus der Punktmenge zu korrespondierenden Punkten des Patientendatensatzes so lange durchgeführt werden, bis der Abstand der Punkte aus der Punktmenge zu korrespondierenden Punkten im Patientendatensatz einen Minimalwert erreicht hat oder mittels einer Metrik minimiert wird. Auch kann aus dem akquirierten, gespeicherten Patientendatensatz eine virtuelle Oberfläche ermittelt oder errechnet oder generiert werden, wobei der Abstand oder Abstandswert der Punkte der Punktmenge der zugeordneten Raumpositionen zu der virtuellen Oberfläche des Patienten bzw. Körperteils des Patienten mittels einer Metrik minimiert werden kann. Zum Beispiel können die Abstände jedes Punktes aus der Punktmenge zu der virtuellen Oberfläche, insbesondere zu korrespondierenden Positionen auf der virtuellen Oberfläche ermittelt werden und es kann die Bestimmung der Abstände oder Abstandswerte oder der Entfernung so lange durchgeführt werden, bis eine möglichst hohe Korrespondenz oder Übereinstimmung zwischen den Punkten der Punktmenge und der virtuellen Oberfläche erreicht ist oder bis der Abstand oder die Abstandwerte der Punkte der Punktmenge zu der virtuellen Oberfläche einen Minimalwert erreicht haben.

Der Minimalwert der Abstände der Punkte aus der Punktmenge zu den korrespondierenden Punkten im Patientendatensatz oder zu der aus den Punkten im Patientendatensatz generierten virtuellen Oberfläche kann auf vielerlei Arten ermittelt werden. Beispielsweise könnte der minimale Abstandswert der beiden Punktmengen oder der Punktmenge zu der virtuellen Oberfläche ermittelt werden, indem die Punktmenge der zugeordneten Raumpositionen solange mit den entsprechenden oder korrespondierenden Punkten des gespeicherten Patientendatensatzes oder mit der virtuellen Oberfläche verglichen oder in Korrespondenz gebracht wird, bis die Wurzel aus der Summe aller Abstandsquadrate der korrespondierenden Punkte oder der Punkte der Punktmenge zu der korrespondierenden Positionen oder Stellen der virtuellen Oberfläche minimal wird. Mit anderen Worten kann z.B. der minimale Abstands-Mittelwert oder Mittelwert der Abstände der jeweils korrespondierenden Punkte der Punktmenge der zugeordneten Raumpositionen und der Punkte des Patientendatensatzes oder der minimale Abstands-Mittelwert der Punkte der Punktmenge zu den jeweils korrespondierenden Positionen auf der virtuellen Oberfläche als Abstands-Minimalwert ermittelt werden. Auch wäre es möglich eine Art Medianwert als Abstands-Minimalwert zu verwenden, so dass derjenige Wert als minimaler Abstandswert bestimmt wird, bei dem zumindest nahezu 50% aller Abstände oder Abstandswerte der jeweils zueinander korrespondierenden Punkte größer und kleiner als der minimale Abstandswert sind.

Unabhängig davon welche Definition des Minimalwertes verwendet wird, wird, wenn die weitestgehende oder größtmögliche Übereinstimmung oder Korrespondenz der Punktmenge der zugeordneten Raumposition zu den korrespondierenden Punkten des Patientendatensatzes oder zu den korrespondierenden Stellen der virtuellen Oberfläche erreicht ist oder der Abstands-Minimalwert erreicht ist, die gegenseitige Zuordnung bzw. die Registrierung von Patienten- bzw. Körperteil-Raumposition und Patientendatensatz festgestellt, so dass der aufgenommene Patient bzw. das aufgenommene Körperteil des Patienten bezüglich des akquirierten, gespeicherten Patientendatensatzes registriert ist.

Erfindungsgemäß wird zur Feststellung der Registrierung eine Art Punktkorrespondenz verwendet, um eine weitestgehende oder bestmögliche Korrespondenz zu erreichen. Das in der WO 01/59708 A1 offenbarte Verfahren benutzt hingegen einen Vergleich von Intensitätsinformationen verschiedener aufgenommener Bilder und eines 3D-Objekts bzw. dessen Beleuchtungsmodell, um eine bestmögliche Korrespondenz zu erreichen.

Bevorzugt wird die Speicherung des Patientendatensatzes, der z.B. mit einem bildgebenden Verfahren, wie einem Computer-Tomographie-, Kernspin-Tomographie-, Ultraschall-Tomographie-, Positronen-Emissions-Tomographie- oder Single Photon Emission Computed Tomography (SPECT)-Verfahren, ermittelt wurde, und der Punktmenge der zugeordneten Raumpositionen computergestützt, z.B. mittels eines medizinischen Navigationssystems, durchgeführt. Auch die Herstellung der Korrespondenz zwischen dem Patientendatensatz und der Punktmenge kann vorzugsweise computergestützt mittels eines medizinischen Navigationssystems durchgeführt werden, dem das Trackingsystem zugeordnet ist.

Insbesondere können auch zwei oder mehr Videobildquellen zur Aufnahme des Patienten oder des Körperteils des Patienten verwendet werden, die z.B. während der Aufnahme, die insbesondere auch gleichzeitig aus unterschiedlichen Positionen oder Blickwinkeln auf den Patienten bzw. auf das Körperteil erfolgen kann, alle im Erfassungsbereich des Trackingsystems positioniert sein können. Die zwei oder mehr Videobildquellen können jeweils fest bzw. unbeweglich bzw. ruhend oder beweglich sein. Auch kann die Lage oder Position der zwei oder mehr Videobildquellen zueinander bekannt sein, so dass sich zumindest eine oder zwei oder auch alle der Videobildquellen im Erfassungsbereich des Trackingsystems befinden müssten, um die Bestimmung der Position oder Lage der zwei oder mehr Videobildquellen im Raum und damit die Bestimmung derer Position während der Aufnahme zu ermöglichen. Besonders bevorzugt befinden sich die zwei oder mehr Videobildquellen an verschiedenen Positionen des Raumes, um z.B. eine gleichzeitige Videobildaufnahme des Patienten bzw. des Körperteils des Patienten aus unterschiedlichen Richtungen oder Aufnahmepositionen zu ermöglichen. Die Videobildquelle oder die Videobildquellen könnten z.B. robotisch bzw. mittels eines oder mehrerer Roboter bewegt werden, so dass zwei oder mehrere Aufnahmen automatisch oder nicht-automatisch akquiriert werden können, ohne dass eine oder mehrere der Videobildquellen zum Zeitpunkt jeder Aufnahme im Erfassungsbereich des Trackingsystems sein müssen. Die Videobildquellen könnten hierfür vorzugsweise ein Mikroskop oder Endoskop mit robotischen Funktionen sein. Insbesondere kann durch das Anbringen der Videobildquelle an ein mechanisches Positionierungssystem, wie einen Roboter, die Lage oder Position der mindestens einen Videobildquelle, vorzugsweise zu dem Referenzkoordinatensystem, ermittelt werden, indem z.B. das Positionierungssystem die Position oder Positionsänderungen der Videobildquelle selbstständig ermitteln kann.

Zur Unterstützung der Identifizierung der korrespondierenden Punkte oder Punkttupel können auch Bildfeaturepunkte und/oder Landmarkenpunkte verwendet werden, wobei vorzugsweise als Bildfeaturepunkte Bildpunkte charakteristischer Bildmerkmale verwendet werden können, welche ein einfaches Auffinden eines korrespondierenden Punktes in einer weiteren Aufnahme ermöglichen können.

Auch können zur Identifizierung korrespondierender Punkte oder Punkttupel, insbesondere Landmarkenpunkte, auf den Patienten bzw. auf das Körperteil des Patienten, welches aufgenommen werden soll, künstliche Landmarkenpunkte aufprojiziert, aufgezeichnet oder angebracht werden.

Zur Unterstützung der Identifizierung der korrespondierenden Punkte bzw. Punktpaare oder der Landmarkenpunkte kann auch computergestütztes Morphing-oder Warpingverfahren verwendet werden. Durch das Morphen oder Warpen eines der Videobilder als Quellbild auf ein weiteres, vorzugsweise aus einer anderen Position aufgenommenes Videobild als Zielbild, können korrespondierende Punktpaare oder korrespondierende Landmarkenpunkte in den Videobildern bevorzugt automatisch detektiert werden. Zum Beispiel kann aus der während oder nach des Morphing- und/oder Warpingvorgangs entstehenden oder entstandenen Deformation des Quellbildes, auf korrespondierende Punkte geschlossen werden, indem z.B. die Punkte als korrespondierende Punkte oder Landmarkenpunkte gefunden oder identifiziert werden, bei welchen keine oder die geringste oder eine geringe Deformation detektiert wird oder festgestellt werden kann. Dabei können vorzugsweise die Exaktheit und/oder die Glätte und/oder die Stärke der Deformation durch Parameter beschrieben werden und z.B. kann eine minimale Stärke der Deformation an einem Punkt oder Punktpaar darauf hindeuten, dass an dem Punkt oder Punktpaar mit minimaler Stärke der Deformation ein korrespondierendes Punktpaar vorliegt.

Die Zuordnung der Punktmenge der zugeordneten Raumpositionen zu dem gespeicherten Patientendatensatz kann insbesondere auch durch ein computergestütztes Matchingverfahren erfolgen, durch welches z.B. mittels Transformationen die Punktmenge mit dem Patientendatensatz soweit als möglich in Korrespondenz gebracht wird.

Vorzugsweise kann als die mindestens eine Videobildquelle mindestens eine Videokamera verwendet werden, die von mindestens zwei Trackingkameras des Trackingsystems registriert und/oder navigiert und/oder getrackt werden kann. Das erfindungsgemäße Verfahren und die erfindungsgemäße Vorrichtung sind jedoch nicht auf optische Trackingsysteme beschränkt. Insbesondere kann das Tracken, z.B. das Tracken der Videobildquelle, mit jedem Trackingsystem, wie z.B. einem Magnettrackingsystem, durchgeführt werden.

Als Videobildquelle kann auch ein Instrument verwendet werden, welches ohnehin schon bei dem chirurgischen Eingriff verwendet wird, wie z.B. ein OP-Mikroskop oder ein Endoskop, in oder an welchen die Videobildquelle angebracht oder enthalten sein kann.

Wird z.B. der Patient oder das Patientenkörperteil verschoben oder deren Form verändert, wie z.B. beim Brainshift des Gehirns, so kann eine neue Zuordnung bzw. eine Neuregistrierung zumindest bereichsweise dadurch erfolgen, dass die beschriebenen Schritte oder das beschriebene Verfahren oder Teile des Verfahrens wiederholt oder neu ausgeführt werden.

Auch kann mittels der durch dieses Verfahren bestimmten Patienten- und/oder Körperteilregistrierung die Lage chirurgischer Instrumente, deren Position und/oder Orientierung im Raum und/oder deren Form durch das Trackingsystem ermittelt werden kann, den Patientendaten überlagert werden und graphisch ausgegeben werden.

Das erfindungsgemäße Verfahren, insbesondere die bei dem Verfahren verwendete Videobildquelle kann in verschiedenen Wellenlängenbereichen betrieben werden. Vorzugsweise arbeitet die mindestens eine Videobildquelle im nichtsichtbaren Wellenlängenbereich des Lichts, wie im Infrarot-Bereich.

Die Erfindung bezieht sich des Weiteren auf ein Computerprogramm, welches, wenn es in einen Computer geladen wird oder auf einem Computer läuft, ein wie oben beschriebenes Verfahren durchführt. Weiterhin bezieht sich die Erfindung auf ein Programmspeichermedium oder ein Computerprogrammprodukt mit einem solchen Programm.

Die erfindungsgemäße Vorrichtung zur videobildunterstützten Patientenregistrierung umfasst mindestens eine Videobildquelle, wie eine Videokamera oder Kamera, zur Erstellung mindestens zweier Videobildaufnahmen oder Bilder eines Patienten bzw. eines Körperteils eines Patienten aus unterschiedlichen Aufnahmepositionen. Die mindestens eine Videobildquelle kann fest bzw. unbeweglich sein oder besonders bevorzugt beweglich sein. Auf der Videobildquelle oder an der Videobildquelle kann eine Trackingreferenz, wie Marker oder ein Referenzstern, angeordnet sein, so dass die dreidimensionale Raumposition der Videobildquelle von einem Trackingsystem erfasst werden kann. Das Trackingsystem kann detektieren, an welcher Position oder Lage im Raum sich die mindestens eine Videobildquelle befindet, insbesondere wo sich die mindestens eine Videobildquelle während des Aufnahmevorganges befindet und kann detektieren, an welcher Position im Raum sich der Körper bzw. das Körperteil des Patienten befindet, falls z.B. an dem Körper ein Trackingreferenz, wie Marker oder ein Referenzstern, angebracht ist. Insbesondere umfasst die erfindungsgemäße Vorrichtung eine Recheneinheit, wie ein Navigationssystem und/oder einen Computer, welche die Punkte oder Landmarkenpunkte der gemachten Aufnahmen der mindestens einen Videobildquelle dreidimensionalen Raumpositionen zuordnet und einen gespeicherten Patientendatensatz, der z.B. mit einem bildgebenden Verfahren erstellt wurde und gespeichert wurde, mit der Punktmenge der zugeordneten Raumposition soweit als möglich in Korrespondenz bringt, indem z.B. der Abstand der Punkte aus der Punktmenge zu korrespondierenden Punkten im Patientendatensatz errechnet und/oder verglichen wird und der Vergleich solange durchgeführt wird, bis ein Minimalwert oder ein minimaler Abstandswert erreicht wird. Die Recheneinheit ist vorzugsweise mit dem Trackingsystem und/oder der mindestens einen Videobildquelle drahtlos oder drahtgebunden in einer Kommunikationsverbindung, so dass die mindestens eine Videobildquelle Daten an die Recheneinheit übermitteln kann und/oder das Trackingsystem Daten an die Recheneinheit übertragen kann oder von dieser empfangen kann. Insbesondere kann beispielsweise in einer Simulation in der Recheneinheit die Punktmenge oder Punktwolke der zugeordneten Raumpositionen so über die Punkte des Patientendatensatzes oder den Patientendatensatz gelegt werden, dass der Abstand der miteinander korrespondierenden Punkte der Punktmenge der zugeordneten Raumpositionen und des Patientendatensatzes minimal wird oder dass ein mittlerer Abstandswert der miteinander korrespondierenden Punkte minimal wird.

Insbesondere kann die Vorrichtung zur videobildunterstützten Patientenregistrierung eine Datenausgabevorrichtung, die mit der Recheneinheit verbunden sein kann, umfassen, die vorzugsweise den Patientendatensatz und/oder die Punktmenge der zugeordneten Raumpositionen und/oder die in Korrespondenz gebrachten Daten der Punktmenge der zugeordneten Raumpositionen und des Patientendatensatzes, z.B. grafisch darstellen und ausgeben kann oder die entsprechenden Werte der Daten ausgeben kann.

Der Patientendatensatz kann z.B. mit einer Dateneingabevorrichtung erfasst werden, welche eine bildgebende Vorrichtung, insbesondere ein Computer-Tomograph und/oder ein Kernspin-Tomograph und/oder ein Ultraschall-Tomograph und/oder ein Positronen-Emissions-Tomograph und/oder ein SPECT-Tomograph sein kann, welche den Patienten bzw. das Körperteil des Patienten aufnehmen kann und die aufgenommenen Daten z.B. in einem Massenspeicher oder in einem optischen Speicher, wie einer CD oder DVD abspeichern kann, so dass die erfindungsgemäße Vorrichtung die Daten einfach z.B. aus dem optischen Speicher auslesen und verwenden kann.

Vorzugsweise ist die mindestens eine Videobildquelle beweglich ausgebildet, so dass ihre Lage relativ zu den Patienten und dem Trackingsystem verändert werden kann. Die mindestens eine Videobildquelle kann, wenn sie beweglich ausgebildet ist, den Körper bzw. das Körperteil des Patienten aus unterschiedlichen Positionen aufnehmen, wobei die aus den unterschiedlichen Positionen aufgenommenen Bilder unter Berücksichtigung der Position der Videobildquelle während des Aufnahmevorganges, welche von dem Trackingsystem detektiert oder erfasst wird, bezüglich eines gemeinsamen Koordinatensystems definiert oder registriert werden können. Die Landmarkenpunkte des Patienten bzw. des Körperteils des Patienten können aus unterschiedlichen Positionen mit der Videobildquelle erfasst werden und bezüglich eines gemeinsamen Koordinatensystems registriert werden, wobei die getrackte Videobildquelle so positioniert werden kann, dass sie von dem Trackingsystem während des Aufnahmevorganges erfasst wird. Insbesondere kann die mindestens eine Videobildquelle so positioniert werden, dass sie sowohl den Patienten bzw. das Körperteil des Patienten erfassen oder aufnehmen kann als auch selbst von dem Trackingsystem detektiert oder getrackt werden kann.

Die mindestens eine Videobildquelle kann in einem Instrument, welches bei einer Operation verwendet werden kann, wie einem OP-Mikroskop oder einem Endoskop, enthalten sein, so dass dieses Instrument nur einmal registriert werden muss, um den Patienten bzw. das Körperteil des Patienten zu erfassen und um während des chirurgischen Eingriffes oder der Operation eingesetzt werden zu können. Eine Neuregistrierung des Instrumentes ist somit nicht erforderlich.

Vorzugsweise kann die erfindungsgemäße Vorrichtung zur videobildunterstützenden Patientenregistrierung auch zwei, insbesondere zueinander kalibrierte Videobildquellen umfassen, die z.B. fest bzw. unbeweglich ausgestaltet und an verschiedenen Orten oder Positionen im Raum positioniert sein können, so dass sich die Blickwinkel oder die Aufnahmeposition der Videobildquellen jeweils unterscheiden, jedoch konstant bzw. unveränderlich sind. Auch können die zwei Videobildquellen beweglich sein, so dass die zwei Videobildquellen frei im Raum bewegt werden können und von dem Trackingsystem detektiert werden können, wobei die Lage der zwei Videobildquellen zueinander, die aufgrund der Kalibrierung bekannt ist, z.B. aufgrund einer Verbindung zwischen den Videobildquellen unveränderlich oder auch veränderlich sein kann.

Die Erfindung wird nachfolgend anhand bevorzugter Ausführungsbeispiele beschrieben werden. Es zeigen:
- Figur 1: eine Vorrichtung gemäß einer ersten Ausführungsform der vorliegenden Erfindung;
- Figur 2: zwei Videobildaufnahmen aus zwei unterschiedlichen Aufnahmepositionen;
- Figur 3: eine Korrespondenzbildung zwischen dem Patientendatensatz und der Punktmenge der zugeordneten Raumpositionen;
- Figur 4: eine Vorrichtung gemäß einer zweiten Ausführungsform der vorliegenden Erfindung.

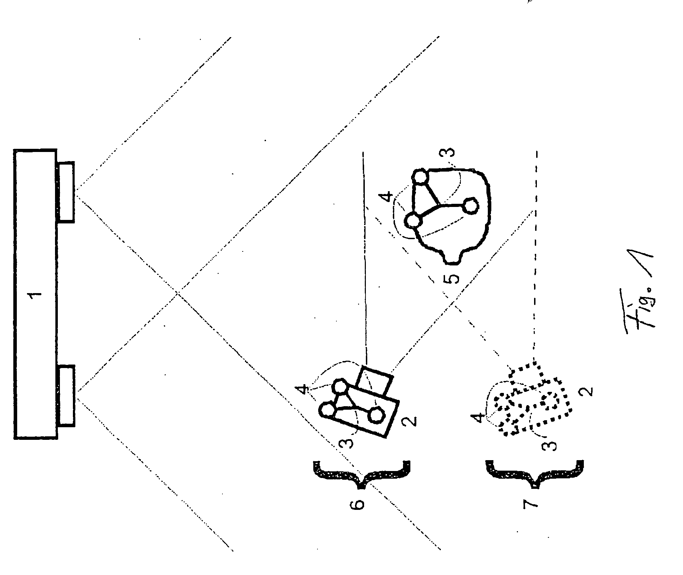

Figur 1 zeigt eine erste Ausführungsform der vorliegenden Erfindung mit einem Trackingsystem 1, wie einem stereoskopischen Infrarot-Trackingsystem, einer Videobildquelle 2, wie z.B. einer Videokamera und einem zu registrierendem Objekt 5, wie z.B. dem Kopf eines Patienten, wobei an der Videobildquelle 2 und an dem zu registrierenden Objekt 5 eine Trackingreferenz 3, z.B. ein Referenzstern mit passiven reflektierenden Markern 4, angebracht ist. In einer ersten Aufnahmeposition 6 nimmt die trackbare Videobildquelle 2 das Objekt 5 aus einer Richtung oder aus einem Blickwinkel auf und liegt dabei in dem Erfassungsbereich des Trackingsystems 1, insbesondere in dem Erfassungsbereich beider Infrarot-Kameras des Trackingsystems 1, so dass die Position oder die Aufnahmeposition 6 der Videobildquelle 2 im Raum von dem Trackingsystem 1 detektiert werden kann. In einer zweiten Aufnahmeposition 7 nimmt die Videobildquelle 2 das Objekt 5 aus einem anderen Blickwinkel oder aus einer anderen Lage auf, wobei die Videobildquelle 2 in der zweiten Aufnahmeposition 7 auch von dem Trackingsystem 1 erfasst und detektiert wird, so dass beide Aufnahmepositionen 6, 7 dem Trackingsystem 1 bekannt sind und beide Aufnahmen unter Berücksichtigung der jeweiligen Aufnahmepositionen 6,7 z.B. bezüglich eines gemeinsamen Koordinatensystems registriert werden können.

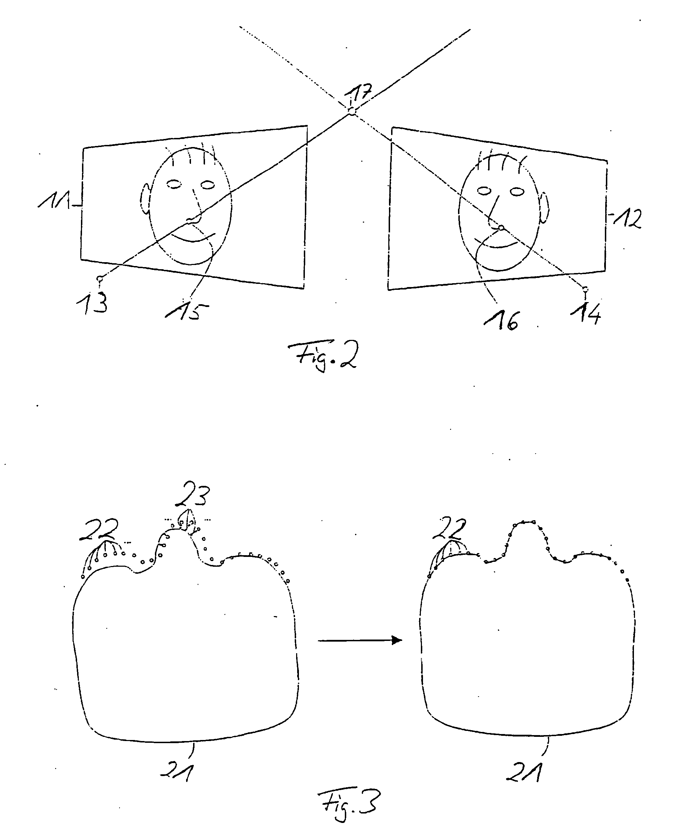

Figur 2 zeigt die Zuordnung von Bildpunkten der zwei verschiedenen Aufnahmen aus den zwei unterschiedlichen Aufnahmepositionen exemplarisch anhand eines charakteristischen Landmarkenpunktes oder korrespondierender Punkttupel 15, 16 in der ersten und zweiten Aufnahme. Der Landmarkenpunkt oder der erste Punkt 15 aus der ersten Bildebene 11, der in einer ersten Aufnahmeposition der Videobildquelle erfasst wurde und der Landmarkenpunkt oder der zweite Punkt 16 der Bildebene 12, der bei einer zweiten Aufnahmeposition der Videobildquelle aufgenommen wurde, können, da die Aufnahmepositionen der Videobildquelle während beider Aufnahmen von dem Trackingsystem detektiert werden können und somit z.B. in einem Koordinatensystem, wie einem Weltkoordinatensystem, bekannt sind, in ein gemeinsames Koordinatensystem, wie das Weltkoordinatensystem, transformiert werden, so dass sich aus den Landmarkenpunkten oder dem korrespondierenden Punkttupel 15, 16 der beiden Aufnahmen ein gemeinsamer rekonstruierter zugehöriger 3D-Urbildpunkt 17 oder Landmarkenpunkt im Ur- oder Weltkoordinatensystem ergibt. Jeder der korrespondierenden Punkte der Bildebenen 11, 12 kann in ein gemeinsames Koordinatensystem oder in einen gemeinsamen 3D-Oberflächenpunkt transformiert werden. Der aus dem Landmarkenpunkt oder korrespondierenden Punkttupel 15, 16 der beiden Aufnahmen erzeugte 3D-Oberflächenpunkt 17 ist der Schnittpunkt der ersten Transformationslinie durch den Landmarkenpunkt und den Fokuspunkt 13 der ersten Bildebene 11 und der zweiten Transformationslinie durch den Landmarkenpunkt oder ersten Punkt 15 des korrespondierenden Punkttupels 15, 16 und den Fokuspunkt 14 der zweiten Bildebene 12. Somit können alle Landmarkenpunkte oder Bildpunkte der Aufnahmen der Bildebene 11 und der Bildebene 12 einer dreidimensionalen Raumposition zugeordnet werden oder einem Urkoordinatensystem zugeordnet werden und damit bezüglich des Ur- oder Weltkoordinatensystems als dreidimensionale Raumposition registriert werden.

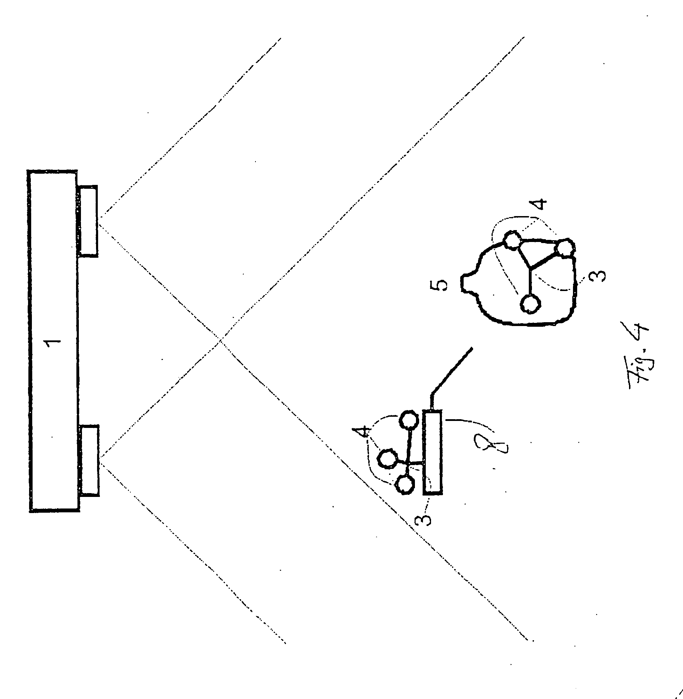

In Figur 3 ist eine Objektoberfläche, wie z.B. die Haut oder die Kontur eines Patienten, dargestellt, welche z.B. mittels eines bildgebenden Verfahrens, wie eines Compufer-Tomographie-Verfahrens, erhalten wurde und z.B. in einem Massenspeicher oder einem optischen Speicher gesichert oder gespeichert werden kann. Dieser Bilddatensatz des Patienten oder eines Körperteils des Patienten wird nun mit der Punktmenge der zugeordneten Raumpositionen oder den bezüglich des Weltkoordinatensystems registrierten Punkten 22, wie Landmarkenpunkten, in Korrespondenz gebracht, wobei, wie in Figur 3 zu sehen ist, ein Abstand 23 oder eine Distanz der Bildpunkte 22 zu der Objektoberfläche 21 besteht. Die gegenseitige Zuordnung bzw. die Registrierung von Patienten- bzw. Körperteil-Raumposition und Patientendatensatz wird dann festgestellt, wenn, wie in Figur 3 zu erkennen, die weitestgehende Korrespondenz oder der Abstands-Minimalwert erreicht ist, insbesondere wenn nahezu kein Abstand 23 zwischen den Punkten und der Objektoberfläche vorhanden ist.

Figur 4 zeigt eine zweite Ausführungsform der vorliegenden Erfindung mit einem optischen Trackingsystem 1, welches insbesondere auf sichtbarem Licht basieren kann, und einem chirurgischem Instrument 8, wie einem OP-Mikroskop oder einem Endoskop, welches bei einem chirurgischen Eingriff eingesetzt werden kann und vorzugsweise eine Videobildquelle, wie eine Kamera, besitzt, mit welcher ein Objekt 5, wie z.B. der Kopf eines Patienten, aufgenommen werden kann. Dabei ist auf dem chirurgischen Instrument 6 und auf dem Objekt 5 eine Trackingreferenz 3 mit Markern 4 angeordnet, so dass die Position oder die Lage des chirurgischen Instruments 6 und des Objektes 5 im Raum von dem Trackingsystem 1 erfasst werden kann. Die Videobildquelle des chirurgischen Instruments 6 kann aus unterschiedlichen Raumpositionen mindestens zwei Videobildaufnahmen aufnehmen, woraus eine Punktmenge an dreidimensionalen Raumpositionen ermittelt werden kann, die bezüglich der gespeicherten Daten des Objekts 5 unter Berücksichtigung der dreidimensionalen Raumposition des Objekts 5 und des chirurgischen Instruments 6 bzw. der Videobildquelle, die von dem Trackingsystem 1 erfasst werden kann, registriert werden kann.

## Patentansprüche

1. Verfahren zur gegenseitigen Zuordnung der Raumposition eines Patienten oder eines Körperteils eines Patienten und eines akquirierten, gespeicherten Patientendatensatzes mit den folgenden Schritten:
- mittels mindestens einer Videobildquelle (2), deren dreidimensionale Position und/oder Orientierung relativ zu einem Welt koordinatensystem durch ein Trackingsystem (1) festgestellt wird, werden mindestens zwei Videobildaufnahmen des Patienten oder des Körperteils aus unterschiedlichen Aufnahmepositionen (6, 7) erstellt;
- in den Videobildaufnahmen werden korrespondierende Punkttupel (15, 16) identifiziert und daraus dreidimensionale Raumpositionen der Patienten- oder körperteiloberfläche bezüglich des Welt koordinatensystems durch Berücksichtigung der Position und/oder der Orientierung der Videobildquelle ermittelt und gespeichert;
- der gespeicherte Patientendatensatz wird computergestützt mit der Punktemenge der Raumpositionen in Korrespondenz gebracht; und
- die gegenseitige Zuordnung oder Registrierung von Patienten- oder Körperteiloberflächen-Raumpositionen und Patientendatensatz bezüglich des welt Koordinatensystems wird festgestellt, wenn die weitestgehende Korrespondenz erreicht ist.

2. Verfahren nach Anspruch 1, bei dem die Korrespondenz der Punktmenge mit dem Patientendatensatz gefunden wird, indem der Abstand der Punkte aus der Punktmenge zu korrespondierenden Punkten im Patientendatensatz mittels einer Metrik minimiert wird.

3. Verfahren nach einem der Ansprüche 1 oder 2, bei dem die Korrespondenz der Punktmenge mit dem Patientendatensatz gefunden wird, indem der Abstand der Punkte aus der Punktmenge zu der aus dem Patientendatensatz generierten virtuellen Oberfläche des Patienten mittels einer Metrik minimiert wird.

4. Verfahren nach einem der Ansprüche 1 bis 3, bei dem die Lage der Videobildquelle relativ zu dem Welt koordinatensystem durch das Anbringen einer Trackingreferenz, die sich im Erfassungsbereich des Trackingsystems befindet, ermittelt wird.

5. Verfahren nach einem der Ansprüche 1 bis 4, bei dem die Lage der Videobildquelle relativ zu dem Weltkoordinatensystem durch einen Kalibriervorgang ermittelt wird.

6. Verfahren nach einem der Ansprüche 1 bis 5, bei dem die Lage der Videobildquelle relativ zu dem Weltkoordinatensystem durch das Anbringen der Videobildquelle an ein mechanisches Positionierungssystem z.B. an einem Roboter ermittelt wird.

7. Verfahren nach einem der Ansprüche 1 bis 6, bei dem die Speicherung des Patientendatensatzes und der Punktmenge, sowie die Herstellung der Korrespondenz computergestützt mittels eines medizinischen Navigationssystems durchgeführt werden, dem das Trackingsystem (1) zugeordnet ist.

8. Verfahren nach einem der Ansprüche 1 bis 7, bei dem zwei oder mehr Videobildquellen (2) verwendet werden.

9. Verfahren nach einem der Ansprüche 1 bis 8, bei dem zur Unterstützung der Identifizierung der korrespondierenden Punkttupel (15, 16) Bildfeaturepunkte verwendet werden.

10. Verfahren nach einem der Ansprüche 1 bis 9, bei dem zur Unterstützung der Identifizierung der korrespondierenden Punkttupel (15, 16) auf den Patienten bzw. auf das Körperteil künstliche Landmarkenpunkte (15, 16) aufprojeziert, aufgezeichnet oder angebracht werden.

11. Verfahren nach einem der Ansprüche 1 bis 10, bei dem als Landmarkenpunkte (15, 16) natürliche, identifizierbare Landmarken des Patienten bzw. des Körperteils verwendet werden.

12. Verfahren nach einem der Ansprüche 1 bis 11, bei dem zur Unterstützung der Identifizierung der korrespondierenden Punkttupel (15, 16) ein computergestütztes Morphingverfahren der Videobilder verwendet wird.

13. Verfahren nach einem der Ansprüche 1 bis 12, bei dem der gespeicherte Patientendatensatz mit der Punktemenge der zugeordneten Raumpositionen durch ein computergestütztes Matchingverfahren in Korrespondenz gebracht wird.

14. Verfahren nach einem der Ansprüche 1 bis 13, bei dem als Videobildquelle (2) mindestens eine Videokamera verwendet wird, die von mindestens zwei Trackingkameras des Trackingsystems (1) getrackt wird.

15. Verfahren nach einem der Ansprüche 1 bis 14, bei dem als Videobildquelle (2) mindestens eine Videokamera verwendet wird, die von einem Magnettrackingsystem getrackt wird.

16. Verfahren nach einem der Ansprüche 1 bis 15, bei dem als Videobildquelle (2) ein OP-Mikroskop verwendet wird.

17. Verfahren nach einem der Ansprüche 1 bis 16, bei dem als Videobildquelle (2) ein Endoskop verwendet wird.

18. Verfahren nach einem der Ansprüche 1 bis 17, bei dem nach einer Verschiebung oder Formänderung des Patienten bzw. des Patientenkörperteils eine neue Zuordnung bzw. Neuregistrierung zumindest bereichsweise durch die Wiederholung der Schritte des Anspruchs 1 erfolgt.

19. Verfahren nach einem der Ansprüche 1 bis 18, das statt der Lage des Patienten die Lage und/oder die Form und/oder die Orientierung chirurgischer Instrumente registriert.

20. Verfahren nach einem der Ansprüche 1 bis 19, wobei die Videoquelle in einem speziellen Wellenlängenbereich, insbesondere im nichtsichtbaren Bereich des Lichts arbeitet.

21. Programm, das wenn es auf einem Computer läuft oder in einem Computer geladen ist, den Computer veranlasst, ein Verfahren gemäß einem der Ansprüche 1 bis 20 durchzuführen.

22. Computerprogramm-Speichermedium, das ein Programm nach Anspruch 21 aufweist.

23. Vorrichtung zur videobildunterstützten Patientenregistrierung mit:
- mindestens einer Videobildquelle (2), deren dreidimensionale Position und/oder Orientierung relativ zu einem Welt koordinatensystem durch ein Trackingsystem (1) festgestellt werden kann, zur Aufnahme mindestens zweier Videobildaufnahmen eines Patienten oder eines Körperteils eines Patienten aus unterschiedlichen Aufnahmepositionen (6, 7), aus
- einer Recheneinheit, wie einem Navigationssystem, die, aus korrespondierenden Punkttupeln in den Videobildaufnahmen (15, 16) dreidimensionale Raumpositionen der Patienten- oder körperteiloberfläche bezüglich des Weltkoordinatensystems durch Berücksichtigung der Position und/oder Orientierung der Videobildquelle ermitteln kann und einen gespeicherten Patientendatensatz mit der Punktmenge der Raumpositionen in Korrespondenz bezüglich des Welt koordinatensystems bringen kann, und mit der mindestens einen Videobildquelle (2) verbunden sein kann.

24. Vorrichtung zur videobildunterstützten Patientenregistrierung nach dem vorhergehenden Anspruch mit dem Trackingsystem (1) zum Erfassen der dreidimensionalen Raumposition der Videobildquelle (2) auf oder an der eine Trackingreferenz (3) vorgesehen ist, wobei die Recheneinheit den gespeicherten Patientendatensatz mit der Punktmenge der zugeordneten Raumpositionen soweit als möglich in Korrespondenz bringt bis der Abstand (23) der Punkte (22) aus der Punktmenge zu korrespondierenden Punkten im Patientendatensatz und/oder zu einer aus dem Patientendatensatz generierten virtuellen Oberfläche einen Minimalwert erreicht und die Recheneinheit mit dem Trackingsystem (1) und/oder der mindestens einen Videobildquelle (2) verbunden sein kann.

## Claims

1. A method for reciprocally assigning the spatial position of a patient or a part of a patient's body and an acquired, stored patient data set, comprising the steps of:
- producing at least two video image recordings of the patient or the part of the body from different recording positions (6, 7), by means of at least one video image source (2) whose three-dimensional position and/or orientation relative to a global co-ordinate system is determined by a tracking system (1);
- identifying corresponding tuples of points (15, 16) in the video image recordings, ascertaining three-dimensional spatial positions of the surface of the patient or part of the body with respect to the global co-ordinate system from said tuples by taking into account the position and/or orientation of the video image source, and storing said positions;
- matching the stored patient data set to the point set of the spatial positions, with computer assistance; and
- determining the reciprocal assignment or registration of spatial positions of the patient or surface of the part of the body and the patient data set with respect to the global co-ordinate system, when the greatest match has been achieved.

2. The method according to claim 1, wherein the match between the point set and the patient data set is found by minimising the distance between the points from the point set and corresponding points in the patient data set, by means of metrics.

3. The method according to any one of claims 1 or 2, wherein the match between the point set and the patient data set is found by minimising the distance between the points from the point set and the virtual surface of the patient generated from the patient data set, by means of metrics.

4. The method according to any one of claims 1 to 3, wherein the position of the video image source relative to the global co-ordinate system is ascertained by attaching a tracking reference which is located within the detection range of the tracking system.

5. The method according to any one of claims 1 to 4, wherein the position of the video image source relative to the global co-ordinate system is ascertained by a calibration process.

6. The method according to any one of claims 1 to 5, wherein the position of the video image source relative to the global co-ordinate system is ascertained by attaching the video image source to a mechanical positioning system, e.g. to a robot.

7. The method according to any one of claims 1 to 6, wherein the patient data set and the point set are stored and the match is established, with computer assistance, by means of a medical navigation system to which the tracking system (1) is assigned.

8. The method according to any one of claims 1 to 7, wherein two or more video image sources (2) are used.

9. The method according to any one of claims 1 to 8, wherein image feature points are used to assist in identifying the corresponding tuples of points (15, 16).

10. The method according to any one of claims 1 to 9, wherein artificial landmark points (15, 16) are projected onto, plotted on or attached to the patient and/or the part of the body in order to assist in identifying the corresponding tuples of points (15, 16).

11. The method according to any one of claims 1 to 10, wherein natural, identifiable landmarks of the patient and/or the part of the body are used as landmark points (15, 16).

12. The method according to any one of claims 1 to 11, wherein a computer-assisted morphing method of the video images is used to assist in identifying the corresponding tuples of points (15, 16).

13. The method according to any one of claims 1 to 12, wherein the stored patient data set is matched to the point set of the assigned spatial positions by a computer-assisted matching method.

14. The method according to any one of claims 1 to 13, wherein at least one video camera which is tracked by at least two tracking cameras of the tracking system (1) is used as a video image source (2).

15. The method according to any one of claims 1 to 14, wherein at least one video camera which is tracked by a magnetic tracking system is used as a video image source (2).

16. The method according to any one of claims 1 to 15, wherein a surgical microscope is used as a video image source (2).

17. The method according to any one of claims 1 to 16, wherein an endoscope is used as a video image source (2).

18. The method according to any one of claims 1 to 17, wherein after the patient or the part of the patient's body has been shifted or its shape changed, a reassignment and/or re-registration is performed at least in sections by repeating the steps of claim 1.

19. The method according to any one of claims 1 to 18, wherein instead of the position of the patient, the method registers the position and/or the shape and/or the orientation of surgical instruments.

20. The method according to any one of claims 1 to 19, wherein the video image source operates in a specific wavelength range, in particular in the non-visible range of light.

21. A program which, when it is running on a computer or is loaded onto a computer, causes the computer to perform a method in accordance with any one of claims 1 to 20.

22. A computer program storage medium comprising a program according to claim 21.

23. A device for patient registration with video image assistance, comprising:
- at least one video image source (2), whose three-dimensional position and/or orientation relative to a global co-ordinate system can be determined by a tracking system (1), for recording at least two video image recordings of a patient or a part of a patient's body from different recording positions (6, 7);
- a computational unit, such as a navigation system, which can ascertain three-dimensional spatial positions of the surface of the patient or part of the body with respect to the global co-ordinate system from corresponding tuples of points (15, 16) in the video image recordings by taking into account the position and/or orientation of the video image source and can match a stored patient data set to the point set of the spatial positions with respect to the global co-ordinate system, and which can be connected to the at least one video image source (2).

24. The device for patient registration with video image assistance according to the preceding claim, comprising the tracking system (1) for detecting the three-dimensional spatial position of the video image source (2), on or on top of which a tracking reference (3) is provided, wherein the computational unit matches the stored patient data set as far as possible to the point set of the assigned spatial positions, until the distance (23) between the points (22) from the point set and corresponding points in the patient data set and/or a virtual surface generated from the patient data set reaches a minimum value, and the computational unit can be connected to the tracking system (1) and/or the at least one video image source (2).

## Revendications

1. Procédé d'association réciproque de la position spatiale d'un patient ou d'une partie corporelle d'un patient et d'un ensemble de données acquises et mémorisées d'un patient, comportant les étapes consistant à :
- réaliser au moyen d'au moins une source d'image vidéo (2), dont la position tridimensionnelle et/ou l'orientation par rapport à un système de coordonnées mondial est constatée par un système de poursuite (1), au moins deux prises de vue vidéo du patient ou de la partie corporelle à partir de différentes positions de prises de vue (6, 7) ;
- identifier dans les prises de vue vidéo des points (15, 16) correspondants et à partir de ceux-ci déterminer et mémoriser des positions spatiales tridimensionnelles de la surface du patient ou de parties corporelles relativement à un système de coordonnées universelles par prise en compte de la position et/ou de l'orientation de la source d'image vidéo ;
- amener le jeu de données mémorisées du patient en correspondance, de manière assistée par ordinateur, avec la quantité de points des positions spatiales ; et
- associer réciproquement ou enregistrer des positions spatiales du patient ou de surfaces de parties corporelles et l'ensemble de données du patient par rapport au système de coordonnées universelles est constaté si la correspondance la plus large est atteinte.

2. Procédé selon la revendication 1 dans lequel la correspondance de la quantité de points et de l'ensemble de données du patient est trouvée en minimisant la distance des points de la quantité de points aux points correspondants dans l'ensemble de données du patient au moyen d'une métrique.

3. Procédé selon l'une des revendications 1 ou 2, dans lequel la correspondance de la quantité de points avec le jeu de données du patient est trouvée en minimisant la distance des points de la quantité de points à la surface virtuelle du patient, générée à partir de l'ensemble de données du patient au moyen d'une métrique.

4. Procédé selon l'une des revendications 1 à 3, dans lequel la position de la source d'image vidéo par rapport au système de coordonnées universelles est déterminée par l'application d'une référence de poursuite qui se trouve dans le domaine de détection du système de poursuite.

5. Procédé selon l'une des revendications 1 à 4, dans lequel la position de la source d'image vidéo par rapport au système de coordonnées universelles est déterminée au moyen d'un processus d'étalonnage.

6. Procédé selon l'une des revendications 1 à 5, dans lequel la position de la source d'image vidéo par rapport au système de coordonnées universelles est déterminée par la mise en place de la source d'image vidéo dans un système mécanique de positionnement, par exemple un robot.

7. Procédé selon l'une des revendications 1 à 6 dans lequel la mémorisation de l'ensemble de données du patient et la quantité de points, ainsi que la réalisation de la correspondance sont exécutées de manière assistée par ordinateur, au moyen d'un système médical de navigation auquel est associé le système de poursuite (1).

8. Procédé selon l'une des revendications 1 à 7, dans lequel on utilise deux sources d'images vidéo (2) ou plus.

9. Procédé selon l'une des revendications 1 à 8, dans lequel pour faciliter l'identification des points (15, 16) correspondants, on utilise des points caractéristiques de l'image.

10. Procédé selon l'une des revendications 1 à 9, dans lequel pour faciliter l'identification des points (15, 16) correspondants on projette, dessine ou place sur le patient ou sur la partie corporelle des points de repère (15, 16) artificiels.

11. Procédé selon l'une des revendications 1 à 10, dans lequel on utilise comme points de repère (15, 16) des repères naturels, identifiables du patient ou de la partie corporelle.

12. Procédé selon l'une des revendications 1 à 11, dans lequel pour faciliter l'identification des points correspondants (15, 16), on utilise un procédé de morphing assisté par ordinateur des images vidéo.

13. Procédé selon l'une des revendications 1 à 12, dans lequel l'ensemble de données mémorisées du patient est amené en correspondance avec la quantité de points des positions spatiales associés, par un procédé de matching assisté par ordinateur.

14. Procédé selon l'une des revendications 1 à 13, dans lequel on utilise comme source d'image vidéo (2) au moins une caméra vidéo qui est suivie par au moins deux caméras de poursuite du système de poursuite (1).

15. Procédé selon l'une des revendications 1 à 14, dans lequel on utilise comme source d'image vidéo (2) au moins une caméra vidéo qui est suivie par un système de poursuite magnétique.

16. Procédé selon l'une des revendications 1 à 15, dans lequel on utilise comme source d'image vidéo (2) un microscope OP.

17. Procédé selon l'une des revendications 1 à 16, dans lequel on utilise comme source d'image vidéo (2) un endoscope.

18. Procédé selon l'une des revendications 1 à 17, dans lequel après un déplacement ou une modification de la forme du patient ou de la partie corporelle du patient, on procède à une nouvelle association ou un nouvel enregistrement au moins par endroits, par répétition des étapes de la revendication 1.

19. Procédé selon l'une des revendications 1 à 18 qui enregistre, au lieu de la position du patient, la position et/ou la forme ou l'orientation d'instruments chirurgicaux.

20. Procédé selon l'une des revendications 1 à 19, dans lequel la source vidéo fonctionne dans une plage spéciale de longueur d'ondes, en particulier dans le domaine non visible de la lumière.

21. Programme qui lorsqu'il tourne sur un ordinateur ou est chargé dans un ordinateur amène l'ordinateur à exécuter un procédé selon l'une des revendications 1 à 20.

22. Moyen de mémorisation de programme informatique qui comporte un programme selon la revendication 21.

23. Dispositif pour l'enregistrement assisté par image vidéo d'un patient comportant :
- au moins une source d'image vidéo (2) dont la position tridimensionnelle et/ou l'orientation par rapport à un système de coordonnées universelles peut être constatée dans les prises de vue vidéo, pour l'enregistrement d'au moins deux prises de vue vidéo d'un patient ou d'une partie corporelle d'un patient à partir de différentes positions de prise de vue (6, 7),
- une unité de calcul, telle qu'un système de navigation, qui à partir de points (15, 16) correspondants dans les prises de vue vidéo peut déterminer des positions spatiales tridimensionnelles de la surface du patient ou de parties corporelles par rapport au système de coordonnées universelles, par prise en compte de la position et/ou de l'orientation de la source d'images vidéo, et peut amener un ensemble de données mémorisées du patient en correspondance avec la quantité de points des positions spatiales par rapport au système de coordonnées universelles, et qui peut être reliée à la au moins une source d'image vidéo (2).

24. Dispositif pour l'enregistrement assisté par images vidéo d'un patient selon la revendication précédente comportant le système de poursuite (1) pour détecter la position spatiale tridimensionnelle de la source d'image vidéo (2) sur laquelle est prévue une référence de poursuite (3), l'unité de calcul amenant l'ensemble de données mémorisées du patient en correspondance avec la quantité de points des positions spatiales associées, dans la mesure du possible, jusqu'à ce que la distance (23) des points (22) de la quantité de points atteigne une valeur minimale par rapport à des points correspondants dans l'ensemble de données du patient et/ou par rapport à une surface virtuelle générée à partir de l'ensemble de données du patient, et l'unité de calcul peut être reliée au système de poursuite (1) et/ou à la au moins une source d'image vidéo (2).
